# EUROPEAN PATENT APPLICATION

(11) **EP 4 819 216 A1**
(43) Date of publication of application: **07.10.2026**
(21) Application number: 24897507.0
(22) Date of filing: 25.11.2024
(51) Int. Cl.: H01M 4/13, H01M 4/36, H01M 4/62, H01M 10/0525, H01M 10/0562

(54) **COATED ACTIVE MATERIAL, POSITIVE ELECTRODE, AND BATTERY**

(30) Priority: 29.11.2023 JP 2023201806
(71) Applicant: Panasonic Intellectual Property Management Co., Ltd., Kadoma-shi, Osaka 571-0057 (JP)
(72) Inventor: TSUJITA, Takuji, Kadoma-shi, Osaka 571-0057 (JP); SAKAI, Akihiro, Kadoma-shi, Osaka 571-0057 (JP)
(74) Representative: Novagraaf International SA
(86) International application number: PCT/JP2024/041695
(87) International publication number: WO 2025/115822

(57) **Abstract**

A coated active material (100) according to the present disclosure includes a positive electrode active material (110) and a coating layer (120) coating at least a portion of a surface of the positive electrode active material (110). The coating layer (120) includes a first layer (111) including a first solid electrolyte and a second layer (112) including a second solid electrolyte. The first layer (111) is located between the second layer (112) and the positive electrode active material. The first solid electrolyte includes Li, Ti, M1, and **F,** where the M1 is at least one selected from the group consisting of Ca, Mg, Al, Y, Zr, and Nb. The second solid electrolyte differs in composition from the first solid electrolyte.

## Description

### TECHNICAL FIELD

The present disclosure relates to a coated active material, a positive electrode, and a battery.

### BACKGROUND ART

In conventional batteries, an electrolyte can be decomposed by an active material. When the electrolyte is decomposed, a coating film of a decomposition product of the electrolyte is formed within an electrode. This leads to adverse effects such as an increase in the internal resistance of the battery and a decrease in the cycle characteristics of the battery.

By coating an active material with an appropriate coating material, decomposition of an electrolyte caused by the active material is suppressed. For example, Patent Literature 1 discloses coating a positive electrode active material with a solid electrolyte including Li, Ti, M1, and F, where M1 is at least one element selected from the group consisting of Ca, Mg, Al, Y, and Zr.

### CITATION LIST

### Patent Literature

Patent Literature 1: WO 2021/187391

### SUMMARY OF INVENTION

### Technical Problem

For conventional active materials having surfaces coated with a coating material, as disclosed in Patent Literature 1, there has been a demand for enhancing the output characteristics of a battery.

### Solution to Problem

The coated active material of the present disclosure includes:
a positive electrode active material; and
a coating layer coating at least a portion of a surface of the positive electrode active material, wherein
the coating layer includes a first layer including a first solid electrolyte and a second layer including a second solid electrolyte,
the first layer is located between the second layer and the positive electrode active material,
the first solid electrolyte includes Li, Ti, M1, and F, where the M1 is at least one selected from the group consisting of Ca, Mg, Al, Y, Zr, and Nb, and
the second solid electrolyte differs in composition from the first solid electrolyte.

### Advantageous Effects of Invention

According to the present disclosure, it is possible to provide a coated active material that can enhance the output characteristics of a battery.

### BRIEF DESCRIPTION OF DRAWINGS

FIG. 1 is a cross-sectional view schematically showing the configuration of a coated active material according to Embodiment 1.
FIG. 2 is a cross-sectional view schematically showing the configuration of a positive electrode according to Embodiment 2.
FIG. 3 is a cross-sectional view schematically showing the configuration of a battery according to Embodiment 3.

### DESCRIPTION OF EMBODIMENTS

Embodiments of the present disclosure are described below with reference to the drawings. The present disclosure is not limited to the embodiments described below.

### (Embodiment 1)

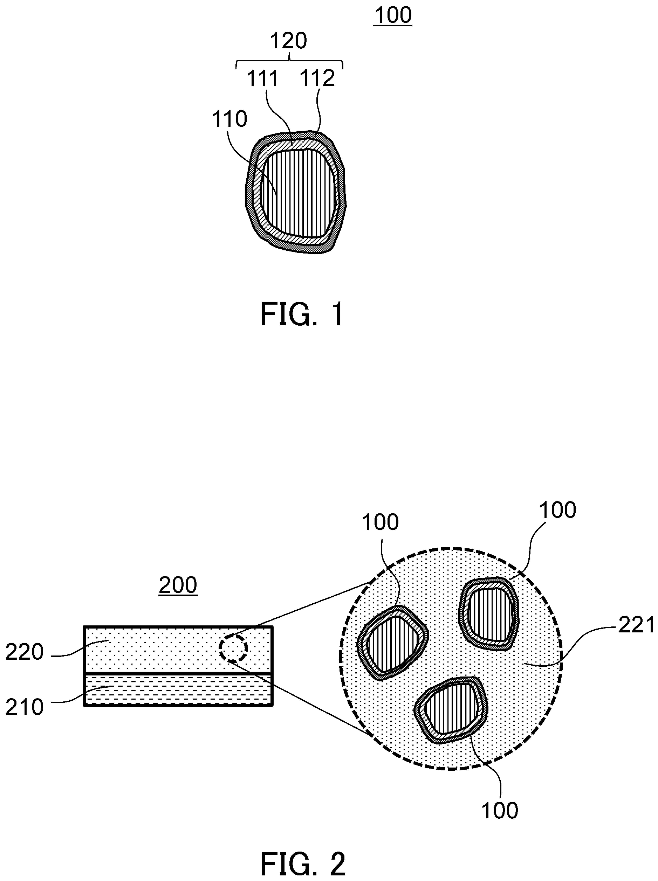

FIG. 1 is a cross-sectional view schematically showing the configuration of a coated active material according to Embodiment 1 of the present disclosure. A coated active material 100 includes a positive electrode active material 110 and a coating layer 120. The positive electrode active material 110 is, for example, in particulate form. The coating layer 120 coats at least a portion of the surface of the positive electrode active material 110. The coating layer 120 includes a first layer 111 and a second layer 112. The first layer 111 is located between the second layer 112 and the positive electrode active material 110. The first layer 111 is a layer including a first solid electrolyte. The second layer 112 is a layer including a second solid electrolyte.

The first solid electrolyte is a solid electrolyte including Li, Ti, M1, and F. M1 is at least one selected from the group consisting of Ca, Mg, Al, Y, Zr, and Nb. The second solid electrolyte is a solid electrolyte differing in composition from the first solid electrolyte.

The first solid electrolyte is a fluoride solid electrolyte and has excellent oxidation resistance due to high electronegativity of fluorine. Since the positive electrode active material 110 is coated with the coating layer 120 having the first layer 111 including the first solid electrolyte, direct contact between the positive electrode active material 110 and the electrolyte is hindered. Thus, decomposition of the electrolyte by the positive electrode active material 110 is reduced.

The coating layer 120 further includes the second layer 112 including the second solid electrolyte differing in composition from the first solid electrolyte. In the coated active material 100, the second layer 112 is located on an outer side relative to the first layer 111. A positive electrode including the coated active material 100 is, for example, composed of a positive electrode material further including other materials such as a solid electrolyte and a conductive additive. By providing the coated active material 100 with the second layer 112 having such a configuration, the interfacial resistance between the coated active material 100 and other materials such as a solid electrolyte is reduced; therefore, the output characteristics of the battery (e.g., discharge capacity and pulse discharge characteristics) can be enhanced. As described above, the coated active material 100 according to Embodiment 1 can exhibit both an effect of enhancing battery characteristics by the first layer 111 of the coating layer 120 and an effect of enhancing output characteristics through reduction of interfacial resistance achieved by the second layer 112.

In the present embodiment, the second layer 112 is, for example, a layer including the outermost surface of the coated active material 100. That is, at least a portion of the outermost surface of the coated active material 100 is formed by the second layer 112. According to such a configuration, the interfacial resistance between the coated active material 100 and other materials such as a solid electrolyte is more reliably reduced; therefore, the output characteristics of the battery can be effectively enhanced. For example, the coated active material 100 according to Embodiment 1 can enhance the discharge capacity of the battery and can also improve the pulse discharge characteristics of the battery.

In the present embodiment, the first layer 111 is, for example, in contact with the positive electrode active material 110. According to such a configuration, contact between the positive electrode active material 110 and the electrolyte is more reliably reduced; therefore, an effect of enhancing battery characteristics by the coating layer 120 can be more effectively exhibited.

In the coating layer 120, the first layer 111 and the second layer 112 may be provided in contact with each other as shown in FIG. 1, or another layer may be further included. That is, the coating layer 120 may further include, for example, another layer provided between the first layer 111 and the second layer 112. Another layer may include, for example, another solid electrolyte differing in composition from the first solid electrolyte and from the second solid electrolyte.

The positive electrode active material 110, the coating layer 120, the first solid electrolyte, and the second solid electrolyte are described in more detail below.

The positive electrode active material 110 is, for example, a material containing lithium and a transition metal and capable of occluding and releasing lithium.

Examples of the positive electrode active material 110 include a lithium-containing transition metal oxide, a lithium-containing transition metal phosphate, a transition metal fluoride, a polyanion material, a fluorinated polyanion material, a transition metal sulfide, a transition metal oxysulfide, and a transition metal oxynitride. In particular, when a lithium-containing transition metal oxide or a lithium-containing transition metal phosphate is used as a positive electrode active material, the battery manufacturing cost can be reduced and the average discharge voltage can be increased. Examples of lithium-containing transition metal oxides include lithium cobalt oxides, lithium nickel cobalt aluminum oxides, lithium nickel cobalt manganese oxides, and lithium nickel manganese oxides. Examples of lithium-containing transition metal phosphates include lithium iron phosphates, lithium vanadium phosphates, lithium cobalt phosphates, and lithium nickel phosphates. At least one selected from these positive electrode active materials can be used. In particular, lithium nickel cobalt manganese oxide (hereinafter referred to as "NCM") is a positive electrode active material appropriate for combination with the coating layer 120 according to Embodiment 1. Accordingly, the positive electrode active material 110 includes, for example, NCM.

The particles of the positive electrode active material 110 may be primary particles or secondary particles. The particles of the positive electrode active material 110 have an average particle diameter of, for example, 1 µm or more and 10 µm or less. The average particle diameter means the particle diameter at a cumulative volume equal to 50% in the volume-based particle size distribution (median diameter). The volume-based particle size distribution is measured using, for example, a laser diffraction particle size analyzer.

The first layer 111 of the coating layer 120 may consist substantially of the first solid electrolyte, or may consist of the first solid electrolyte. Here, "the first layer 111 consists substantially of the first solid electrolyte" means that the content of the first solid electrolyte in the first layer 111 is 90 mass% or more. In one example, the content may be 95 mass% or more.

As described above, the first solid electrolyte included in the first layer 111 of the coating layer 120 includes Li, Ti, M1, and F. The first solid electrolyte may consist substantially of Li, Ti, M1, and F, or may consist of Li, Ti, M1, and F. Here, "the first solid electrolyte consists substantially of Li, Ti, M1, and F" means that the molar ratio of the sum of the amounts of substance of Li, Ti, M1, and F to the total of the amounts of substance of all the elements constituting the first solid electrolyte is 90% or more. In one example, the molar ratio may be 95% or more.

In the first solid electrolyte, the ratio of the amount of substance of Li to the sum of the amounts of substance of Ti and M1 is, for example, 0.5 or more and 4.5 or less. When the ratio is within such a range, the first solid electrolyte has excellent lithium-ion conductivity.

M1 may be at least one selected from the group consisting of Ca, Mg, and Al. In this case, the first solid electrolyte has excellent lithium-ion conductivity.

M1 may be Al. In this case, the first solid electrolyte has excellent lithium-ion conductivity.

The first solid electrolyte may have a composition represented by the following formula (1).

Li_{6-(4-4x+m1x)b}(Ti₁₋ₓM1ₓ)_{b}F₆ (1)

in the above formula (1), 0 < x < 1 and 0 < b ≤ 2 are satisfied, and m1 is the valence of M1.

When the first solid electrolyte has the composition represented by the above formula (1), the first solid electrolyte has excellent lithium-ion conductivity.

The first solid electrolyte may be free of sulfur. According to the above configuration, the generation of hydrogen sulfide gas can be prevented. Accordingly, a battery having enhanced safety can be achieved.

As described above, the second layer 112 of the coating layer 120 is a layer including the second solid electrolyte. The second layer 112 may be, for example, substantially free of a conductive additive. Here, "the second layer 112 is substantially free of a conductive additive" means that the content of a conductive additive in the second layer 112 is 0.1 mass% or less. The second layer 112 may be free of a conductive additive. The conductive additive as used herein means a conductive additive used to reduce the resistance of the positive electrode. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene.

The second layer 112 may consist substantially of the second solid electrolyte, or may consist of the second solid electrolyte. Here, "the second layer 112 consists substantially of the second solid electrolyte" means that the content of the second solid electrolyte in the second layer 112 is 90 mass% or more. In one example, the content may be 95 mass% or more.

The second solid electrolyte contains, for example, a halide solid electrolyte. The second solid electrolyte may be the halide solid electrolyte. In this case, the second layer 112 has excellent lithium-ion conductivity and can effectively reduce the interfacial resistance between the coated active material 100 and other materials such as a solid electrolyte in a positive electrode. Accordingly, in this case, the coated active material 100 can further enhance the output characteristics of the battery.

The second solid electrolyte includes, for example, Li, M2, Y, and X. M2 is at least one element selected from the group consisting of metalloid elements and metal elements other than Li and Y. X is at least one selected from the group consisting of F, Cl, Br, and I. In this case, the second layer 112 including the second solid electrolyte has excellent lithium-ion conductivity and can effectively reduce the interfacial resistance between the coated active material 100 and other materials such as a solid electrolyte in a positive electrode. Accordingly, in this case, the coated active material 100 can further enhance the output characteristics of the battery.

The "metalloid elements" include B, Si, Ge, As, Sb, and Te.

The "metal elements" include all the elements in Groups 1 to 12 of the periodic table except hydrogen and all the elements in Groups 13 to 16 of the periodic table except B, Si, Ge, As, Sb, Te, C, N, P, O, S, and Se. That is, the metal elements are a group of elements that can become a cation when forming an inorganic compound with a halogen element.

M2 may be at least one selected from the group consisting of Na, K, Rb, Cs, Mg, Ca, Sr, Ba, Sc, Ti, Zr, Hf, Nb, Ta, W, Zn, Al, Ga, In, Si, Ge, Sn, Sb, and Bi. M2 is desirably at least one selected from the group consisting of Ti, Hf, Zr, and In, and M2 may be Zr.

M2 may be at least one element selected from the group consisting of Group 3 to Group 13 elements. M2 may be at least one selected from the group consisting of Sc, Ti, Zr, Hf, Nb, Ta, W, Zn, Al, Ga, and In.

X may be Cl. In this case, the coated active material 100 can further enhance the output characteristics of the battery.

The second solid electrolyte may have a composition represented by the following formula (2).

Li_{d}M2ₑY_{f}X₆ (2)

where M2 and X in the above formula (2) are as described above. Further, in the above formula (2), 5.7 < d + m2e + 3f < 6.3, d > 0, e > 0, and f ≥ 0 are satisfied, and m2 is the valence of M2.

When the second solid electrolyte has the composition represented by the above formula (2), the second layer 112 including the second solid electrolyte has excellent lithium-ion conductivity and can effectively reduce the interfacial resistance between the coated active material 100 and other materials such as a solid electrolyte in a positive electrode. Accordingly, in this case, the coated active material 100 can further enhance the output characteristics of the battery.

The second solid electrolyte may be free of sulfur. According to the above configuration, the generation of hydrogen sulfide gas can be prevented. Accordingly, a battery having enhanced safety can be achieved.

The ratio of the mass of the second solid electrolyte to the mass of the positive electrode active material 110 is, for example, more than 0 mass% and 5 mass% or less. When the coated active material 100 includes the second solid electrolyte at the above mass ratio, the coated active material 100 can further enhance the output characteristics of the battery. The ratio of the mass of the second solid electrolyte to the mass of the positive electrode active material 110 may be 3 mass% or less or 2 mass% or less. In this case, the coated active material 100 can still further enhance the output characteristics of the battery. Further, the ratio of the mass of the second solid electrolyte to the mass of the positive electrode active material 110 may be 0.1 mass% or more or 0.5 mass% or more. In this case, the coated active material 100 can still further enhance the output characteristics of the battery.

The ratio of the mass of the second solid electrolyte to the mass of the positive electrode active material 110 can be determined by, for example, mass measurement by inductively coupled plasma mass spectrometry (ICP-MS).

The average thickness of the first layer 111 is, for example, 1 nm or more and 150 nm or less. The average thickness of the first layer 111 is preferably 100 nm or less, and more preferably 50 nm or less. By appropriately adjusting the average thickness of the first layer 111, an effect of enhancing the output characteristics of the battery can be enhanced. The average thickness of the first layer 111 can be calculated from a STEM image obtained using a scanning transmission electron microscope (STEM). The average thickness can be the average value of the thicknesses at a plurality of points (e.g., five points).

The average thickness of the second layer 112 is, for example, 1 nm or more and 150 nm or less. The average thickness of the first layer 111 is preferably 100 nm or less. By appropriately adjusting the average thickness of the second layer 112, an effect of enhancing the output characteristics of the battery can be enhanced. The average thickness of the second layer 112 can be calculated from a STEM image obtained using STEM in the same manner as for the first layer 111. The average thickness can be the average value of the thicknesses at a plurality of points (e.g., five points).

The coated active material 100 according to Embodiment 1 has an average particle diameter of, for example, 1 µm or more and 10 µm or less. The average particle diameter of the coated active material 10 means the particle diameter at a cumulative volume equal to 50% in the volume-based particle size distribution (median diameter). The volume-based particle size distribution is measured using, for example, a laser diffraction particle size analyzer. When the thickness of the coating layer 120 is on the order of nanometers, the average particle diameter of the coated active material 100 is substantially equal to the average particle diameter of the positive electrode active material 110.

The coated active material 100 according to Embodiment 1 can be manufactured, for example, by the following method.

First, the material for the first layer 111 is adhered to the surface of the particle of the positive electrode active material 110. The material for the first layer 111 includes the first solid electrolyte.

The method for adhering the material for the first layer 111 to the surface of the positive electrode active material 110 is not particularly limited. For example, a powder of the positive electrode active material 110 and a powder of the material for the first layer 111 are mixed in an appropriate ratio to obtain a mixture. The mixture is subjected to a milling process to impart mechanical energy to the mixture. For the milling process, a mixer, such as a ball mill, can be used. To suppress oxidation of the materials, the milling process may be performed in a dry atmosphere and an inert atmosphere.

The first layer 111 may be manufactured by a dry particle composing method. Processing by the dry particle composing method includes imparting mechanical energy generated by at least one selected from the group consisting of impact, compression, and shear to the positive electrode active material 110 and the material for the first layer 111.

Examples of apparatuses capable of imparting such mechanical energy to the mixture of the positive electrode active material 110 and the material for the first layer 111 include ball mills and processing apparatuses (particle composing apparatuses), such as "MECHANO FUSION" (manufactured by Hosokawa Micron Corporation) and "NOBILTA" (manufactured by Hosokawa Micron Corporation).

In each of the apparatuses, the thickness of the first layer 111 can be controlled by adjusting conditions such as rotational speed, processing time, and charge amount. However, a process using any of the above apparatuses is not required. The first layer 111 may be manufactured by mixing the positive electrode active material 110 and the material for the first layer 111 using a mortar, a mixer, or the like. The material for the first layer 111 may be deposited on the surface of the positive electrode active material 110 by various methods such as spraying, spray-dry coating, electrodeposition, immersion, and mechanical mixing using a disperser.

Next, the second layer 112 is formed by adhering the material for the second layer 112 to the surface of the particle of the positive electrode active material 110 having the first layer 111 formed on the surface thereof. The material for the second layer 112 includes the second solid electrolyte.

As a method for adhering the material for the second layer 112 to the surface of the particle of the positive electrode active material 110 having the first layer 111 formed on the surface thereof, the above methods exemplified as methods for forming the first layer 111 can be used.

### (Embodiment 2)

A positive electrode according to Embodiment 2 includes the coated active material according to Embodiment 1. The positive electrode according to Embodiment 2 can enhance the output characteristics of the battery. For example, the positive electrode according to Embodiment 2 can enhance the discharge capacity of the battery and can also improve the pulse discharge characteristics of the battery.

FIG. 2 is a cross-sectional view schematically showing the configuration of a positive electrode 200 according to Embodiment 2. The positive electrode 200 includes, for example, a positive electrode current collector 210 and a positive electrode active material layer 220 supported on the positive electrode current collector 210. The positive electrode active material layer 220 includes the coated active material 100 according to Embodiment 1.

The positive electrode active material layer 220 may include only the coated active material 100 according to Embodiment 1 as the positive electrode active material, or may further include a positive electrode active material different from the coated active material 100 according to Embodiment 1.

The positive electrode active material layer 220 includes, for example, a solid electrolyte. The solid electrolyte included in the positive electrode active material layer 220 is hereinafter referred to as a third solid electrolyte.

The positive electrode active material layer 220 consists of, for example, the coated active material 100 and a material phase 221 composed of other materials excluding the coated active material 100, as shown in FIG. 2. The material phase 221 includes, for example, the third solid electrolyte. The material phase 221 may further include, in addition to the third solid electrolyte, a conductive additive described below and the like. The positive electrode active material layer 220 has, for example, a sea-island structure in which the coated active material 100 is regarded as an island and a region defined by the material phase 221 including the third solid electrolyte is regarded as a sea. When the positive electrode active material layer 220 has such a sea-island structure, the content of the conductive additive in the island is lower than the content of the conductive additive in the sea. Further, in the interfacial region between the island and the sea, the content of the conductive additive in the coating layer 120 (i.e., the first layer 111 and/or the second layer 112) constituting the interface on the island side is lower than the content of the conductive additive in the sea. That is, the second layer 112 may be, for example, substantially free of a conductive additive. Here, "the second layer 112 is substantially free of a conductive additive" means that the content of a conductive additive in the second layer 112 is 0.1 mass% or less. The second layer 112 may be free of a conductive additive. Since the first layer 111 and the second layer 112 are thin films, even when the first layer 111 and the second layer 112 are substantially free of a conductive additive, the interfacial resistance between the coated active material 100 and other materials such as the third solid electrolyte can be effectively reduced without increasing the resistance of the positive electrode 200.

By elemental mapping of a cross section that includes the interface between the coated active material 100 and the material phase 221 and the vicinity of the interface, it is possible to verify whether the content of the conductive additive in the coating layer 120 (i.e., the first layer 111 and/or the second layer 112) constituting the interface on the island side is lower than the content of the conductive additive in the material phase 221 regarded as the sea in the interfacial region between the island and the sea. The elemental map can be obtained by energy dispersive X-ray spectroscopy (STEM-EDX) combined with a scanning transmission electron microscope.

Examples of the third solid electrolyte include a halide solid electrolyte, a sulfide solid electrolyte, a polymer solid electrolyte, and a complex hydride solid electrolyte. Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂. Examples of the polymer solid electrolyte include compounds of a polymer compound having an ethylene oxide structure and a lithium salt. The lithium salt can be, for example, at least one selected from the group consisting of LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. Examples of the complex hydride solid electrolyte include LiBH₄-LiI and LiBH₄-P₂S₅. The halide solid electrolyte may be a material represented by the following formula (3).

Li_{α}M3_{β}X'_{γ} (3)

in the formula (3), α, β, and γ are each independently a value greater than 0, M3 is at least one selected from the group consisting of metalloid elements and metal elements other than Li, and X' is at least one selected from the group consisting of F, Cl, Br, and I.

The "metalloid elements" include B, Si, Ge, As, Sb, and Te.

The "metal elements" include all the elements in Groups 1 to 12 of the periodic table except hydrogen and all the elements in Groups 13 to 16 of the periodic table except B, Si, Ge, As, Sb, Te, C, N, P, O, S, and Se. That is, the metal elements are a group of elements that can become a cation when forming an inorganic compound with a halogen element.

The third solid electrolyte may be at least one selected from the group consisting of a sulfide solid electrolyte and a halide solid electrolyte. In this case, the positive electrode 200 has excellent lithium-ion conductivity.

The third solid electrolyte may be the halide solid electrolyte. In this case, the positive electrode 200 has excellent lithium-ion conductivity.

When the third solid electrolyte is the halide solid electrolyte, the third solid electrolyte may include Cl.

The third solid electrolyte may be free of sulfur. According to the above configuration, the generation of hydrogen sulfide gas can be prevented. Accordingly, a battery having enhanced safety can be achieved.

The positive electrode active material layer 220 may include other materials such as a conductive additive and a binder as necessary.

The conductive additive is used to reduce the resistance of the positive electrode 200. Examples of the conductive additive include a carbon material and a conductive polymer compound. Examples of carbon materials include carbon black, graphite, acetylene black, carbon nanotubes, carbon nanofibers, graphene, fullerenes, and graphite oxide. Examples of conductive polymer compounds include polyaniline, polypyrrole, and polythiophene. At least one selected from these conductive additives can be used.

The binder is used to enhance the binding properties of the materials constituting the positive electrode 200. Examples of the binder include polymer materials such as polyvinylidene fluoride, a vinylidene fluoride-hexafluoropropylene copolymer, a vinylidene fluoride-tetrafluoroethylene copolymer, polytetrafluoroethylene, carboxymethylcellulose, polyacrylic acid, styrene-butadiene copolymer rubber, polypropylene, polyethylene, and polyimide. At least one selected from these binders can be used.

The positive electrode current collector 210 is, for example, a sheet or film formed of a metal material such as aluminum, an aluminum alloy, stainless steel, titanium, or a titanium alloy. The sheet or film may be porous or non-porous. Examples of the sheet or film include a metal foil and a metal mesh. A carbon material as a conductive auxiliary material may be applied to the surface of the positive electrode current collector 210.

The positive electrode 200 according to Embodiment 2 can be prepared, for example, by mixing the materials constituting the positive electrode active material layer 220 and a solvent to prepare a positive electrode slurry, applying the positive electrode slurry onto the positive electrode current collector 210 to form a coating film, and then drying the coating film.

### (Embodiment 3)

A battery according to Embodiment 3 includes the positive electrode according to Embodiment 2, a negative electrode, and a solid electrolyte layer. The solid electrolyte layer is disposed between the positive electrode and the negative electrode. By including the positive electrode according to Embodiment 2, the battery according to Embodiment 3 can enhance the output characteristics. For example, the battery according to Embodiment 3 can enhance the discharge capacity and can also improve the pulse discharge characteristics.

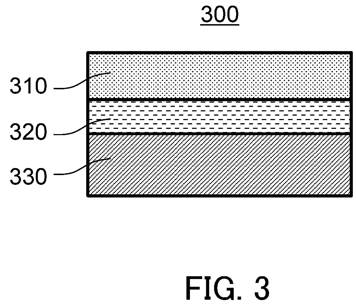

FIG. 3 is a cross-sectional view schematically showing the configuration of a battery 300 according to Embodiment 3. The battery 300 includes a positive electrode 310, a negative electrode 330, and a solid electrolyte layer 320 disposed between the positive electrode 310 and the negative electrode 330. The positive electrode 310 is the positive electrode 200 according to Embodiment 2. According to such a configuration, the battery 300 can enhance the output characteristics.

The battery 300 according to Embodiment 3 may be an all-solid-state battery.

The negative electrode 330 includes a negative electrode active material. The negative electrode active material is a material capable of occluding and releasing lithium. Examples of the negative electrode active material capable of occluding and releasing lithium include lithium titanate, graphite, silicon, silicon-containing oxides, zinc alloys, lithium metal, and lithium alloys. At least one selected from these negative electrode active materials can be used.

The negative electrode 330 may include other materials such as a conductive additive and a binder. As the conductive additive and the binder, materials that can be used for the positive electrode 310 can also be used for the negative electrode 330.

The solid electrolyte layer 320 includes a solid electrolyte. The solid electrolyte can be a halide solid electrolyte, a sulfide solid electrolyte, an oxide solid electrolyte, a polymer solid electrolyte, a complex hydride solid electrolyte, or the like. The solid electrolyte layer 320 may be formed of a plurality of solid electrolytes differing in composition from each other. The solid electrolyte layer 320 may be a stack of a plurality of solid electrolyte membranes.

### (Other Embodiments)

### (Supplementary Description)

From the description of the above embodiments, the following techniques are disclosed.

### (Technique 1)

A coated active material including:
a positive electrode active material; and
a coating layer coating at least a portion of a surface of the positive electrode active material, wherein
the coating layer includes a first layer including a first solid electrolyte and a second layer including a second solid electrolyte,
the first layer is located between the second layer and the positive electrode active material,
the first solid electrolyte includes Li, Ti, M1, and F, where the M1 is at least one selected from the group consisting of Ca, Mg, Al, Y, Zr, and Nb, and
the second solid electrolyte differs in composition from the first solid electrolyte.

According to such a configuration, the output characteristics of a battery can be enhanced.

### (Technique 2)

The coated active material according to Technique 1, wherein
the second layer is a layer including an outermost surface of the coated active material.

According to such a configuration, the output characteristics of a battery can be effectively enhanced.

### (Technique 3)

The coated active material according to Technique 1 or 2, wherein
the first layer is in contact with the positive electrode active material.

According to such a configuration, the output characteristics of a battery can be effectively enhanced.

### (Technique 4)

The coated active material according to any one of Techniques 1 to 3, wherein
in the first solid electrolyte, a ratio of an amount of substance of Li to a sum of amounts of substance of Ti and the M1 is 0.5 or more and 4.5 or less.

Thus, the first solid electrolyte has excellent lithium-ion conductivity.

### (Technique 5)

The coated active material according to any one of Techniques 1 to 4, wherein
the M1 is at least one selected from the group consisting of Ca, Mg, and Al.

Thus, the first solid electrolyte has excellent lithium-ion conductivity.

### (Technique 6)

The coated active material according to Technique 5, wherein
the M1 is Al.

Thus, the first solid electrolyte has excellent lithium-ion conductivity.

### (Technique 7)

The coated active material according to any one of Techniques 1 to 6, wherein
the first solid electrolyte has a composition represented by the following formula (1):

   Li_{6-(4-4x+m1x)b}(Ti₁₋ₓM1ₓ)_{b}F₆ (1)
in the formula (1), $0 < x < 1 and 0 < b \leq 2$ are satisfied, and
the m1 is a valence of the M1.

Thus, the first solid electrolyte has excellent lithium-ion conductivity.

### (Technique 8)

The coated active material according to any one of Techniques 1 to 7, wherein
the second layer is substantially free of a conductive additive.

According to such a configuration, the output characteristics of a battery can be further enhanced.

### (Technique 9)

The coated active material according to any one of Techniques 1 to 8, wherein
the second solid electrolyte includes a halide solid electrolyte.

According to such a configuration, the output characteristics of a battery can be further enhanced.

### (Technique 10)

The coated active material according to Technique 9, wherein
the second solid electrolyte is the halide solid electrolyte.

According to such a configuration, the output characteristics of a battery can be further enhanced.

### (Technique 11)

The coated active material according to any one of Techniques 1 to 10, wherein
the second solid electrolyte includes Li, M2, Y, and X,
the M2 is at least one element selected from the group consisting of metalloid elements and metal elements other than Li and Y, and
the X is at least one selected from the group consisting of F, Cl, Br, and I.

According to such a configuration, the output characteristics of a battery can be further enhanced.

### (Technique 12)

The coated active material according to any one of Techniques 1 to 11, wherein
the second solid electrolyte has a composition represented by the following formula (2):

   Li_{d}M2ₑY_{f}X₆ (2)
in the formula (2),
the M2 is at least one element selected from the group consisting of metalloid elements and metal elements other than Li and Y,
the X is at least one selected from the group consisting of F, Cl, Br, and I, $5.7 < d + m 2 e + 3 f < 6.3 , d > 0 , e > 0 , and f \geq 0$ are satisfied, and
the m2 is a valence of the M2.

According to such a configuration, the output characteristics of a battery can be further enhanced.

### (Technique 13)

The coated active material according to Technique 11 or 12, wherein
the M2 is at least one selected from the group consisting of Na, K, Rb, Cs, Mg, Ca, Sr, Ba, Sc, Ti, Zr, Hf, Nb, Ta, W, Zn, Al, Ga, In, Si, Ge, Sn, Sb, and Bi.

According to such a configuration, the output characteristics of a battery can be further enhanced.

### (Technique 14)

The coated active material according to any one of Techniques 11 to 13, wherein
the X is Cl.

According to such a configuration, the output characteristics of a battery can be further enhanced.

### (Technique 15)

The coated active material according to any one of Techniques 1 to 14, wherein
a ratio of a mass of the second solid electrolyte to a mass of the positive electrode active material is more than 0 mass% and 5 mass% or less.

According to such a configuration, the output characteristics of a battery can be further enhanced.

### (Technique 16)

The coated active material according to any one of Techniques 1 to 15, wherein
an average thickness of the first layer is 1 nm or more and 150 nm or less.

According to such a configuration, the output characteristics of a battery can be further enhanced.

### (Technique 17)

The coated active material according to any one of Techniques 1 to 16, wherein
an average thickness of the second layer is 1 nm or more and 150 nm or less.

According to such a configuration, the output characteristics of a battery can be further enhanced.

### (Technique 18)

A positive electrode including the coated active material according to any one of Techniques 1 to 17.

According to such a configuration, the output characteristics of a battery can be enhanced.

### (Technique 19)

A positive electrode including a positive electrode active material layer, the positive electrode active material layer consisting of a coated active material and a material phase excluding the coated active material, wherein
the coated active material includes a positive electrode active material and a coating layer coating at least a portion of a surface of the positive electrode active material,
the coating layer includes a first layer including a first solid electrolyte and a second layer including a second solid electrolyte,
the first layer is located between the second layer and the positive electrode active material,
the first solid electrolyte includes Li, Ti, M1, and F, where the M1 is at least one selected from the group consisting of Ca, Mg, Al, Y, Zr, and Nb, and
the second solid electrolyte differs in composition from the first solid electrolyte,
the material phase includes a third solid electrolyte, and
in an interfacial region between the coated active material and the material phase, a content of a conductive additive in the coating layer is lower than a content of a conductive additive in the material phase.

According to such a configuration, the output characteristics of a battery can be enhanced.

### (Technique 20)

The positive electrode according to Technique 19, wherein
in the first solid electrolyte, a ratio of an amount of substance of Li to a sum of amounts of substance of Ti and the M1 is 0.5 or more and 4.5 or less.

Thus, the first solid electrolyte has excellent lithium-ion conductivity.

### (Technique 21)

The positive electrode according to Technique 19 or 20, wherein
the first solid electrolyte has a composition represented by the following formula (1):

   Li_{6-(4-4x+m1x)b}(Ti₁₋ₓM1ₓ)_{b}F₆ (1)
in the formula (1), $0 < x < 1 and 0 < b \leq 2$ are satisfied, and
the m1 is a valence of the M1.

Thus, the first solid electrolyte has excellent lithium-ion conductivity.

### (Technique 22)

The positive electrode according to any one of Techniques 19 to 21, wherein
the second solid electrolyte includes a halide solid electrolyte.

According to such a configuration, the output characteristics of a battery can be further enhanced.

### (Technique 23)

The positive electrode according to any one of Techniques 19 to 22, wherein
the second solid electrolyte includes Li, M2, Y, and X,
the M2 is at least one element selected from the group consisting of metalloid elements and metal elements other than Li and Y, and
the X is at least one selected from the group consisting of F, Cl, Br, and I.

According to such a configuration, the output characteristics of a battery can be further enhanced.

### (Technique 24)

The positive electrode according to any one of Techniques 19 to 23, wherein
the second solid electrolyte has a composition represented by the following formula (2):

   Li_{d}M2ₑY_{f}X₆ (2)
in the formula (2),
the M2 is at least one element selected from the group consisting of metalloid elements and metal elements other than Li and Y,
the X is at least one selected from the group consisting of F, Cl, Br, and I, $5.7 < d + m 2 e + 3 f < 6.3 , d > 0 , e > 0 , and f \geq 0$ are satisfied, and
the m2 is a valence of the M2.

According to such a configuration, the output characteristics of a battery can be further enhanced.

### (Technique 25)

The positive electrode according to any one of Techniques 19 to 24, wherein
an average thickness of the first layer is 1 nm or more and 150 nm or less.

According to such a configuration, the output characteristics of a battery can be further enhanced.

### (Technique 26)

The positive electrode according to any one of Techniques 19 to 25, wherein
an average thickness of the second layer is 1 nm or more and 150 nm or less.

According to such a configuration, the output characteristics of a battery can be further enhanced.

### (Technique 27)

A battery including:
the positive electrode according to Technique 18;
a negative electrode; and
a solid electrolyte layer disposed between the positive electrode and the negative electrode.

According to such a configuration, the output characteristics of a battery can be enhanced.

### (Technique 28)

A battery including:
the positive electrode according to any one of Techniques 19 to 26;
a negative electrode; and
a solid electrolyte layer disposed between the positive electrode and the negative electrode.

According to such a configuration, the output characteristics of a battery can be enhanced.

### EXAMPLES

The present disclosure is described in more detail below with reference to examples. The following examples are merely illustrative of one aspect and are not intended to limit the present disclosure.

### (Example 1)

### [Preparation of First Solid Electrolyte]

In an argon atmosphere with a dew point of -60°C or less, the raw material powders LiF, TiF₄, and AlF₃ were weighed in a molar ratio of LiF:TiF₄:AlF₃ = 2.7:0.3:0.7. These were pulverized and mixed in a mortar to obtain a mixture. The mixture was then subjected to a milling process using φ5-mm zirconia balls and a planetary ball mill (Model P-7, manufactured by Fritsch GmbH) at 500 rpm for 12 hours. Thus, the first solid electrolyte in powder form having a composition of Li_{2.7}Ti_{0.3}Al_{0.7}F₆ was obtained. Li_{2.7}Ti_{0.3}Al_{0.7}F₆ is hereinafter referred to as "LTAF".

### [Preparation of Second Solid Electrolyte]

In an argon atmosphere with a dew point of -60°C or less, the raw material powders LiCl, ZrCl₄, and YCl₃ were weighed in a molar ratio of LiCl:ZrCl₄:YCl₃ = 2.5:0.5:0.5. These were pulverized and mixed in a mortar to obtain a mixture. The mixture was then subjected to a milling process using φ5-mm zirconia balls and a planetary ball mill (Model P-7, manufactured by Fritsch GmbH) at 500 rpm for 12 hours. Thus, the second solid electrolyte in powder form having a composition of Li_{2.5}Zr_{0.5}Y_{0.5}Cl₆ was obtained. Li_{2.5}Zr_{0.5}Y_{0.5}Cl₆ is hereinafter referred to as "LZYC".

### [Preparation of Coated Positive Electrode Active Material]

As the positive electrode active material, NCM powder (average particle diameter: 5 µm) was prepared. The first solid electrolyte was adhered to the surface of the NCM particle to form the first layer of the coating layer. The first layer of the coating layer was formed by a compression shear process using a particle composing apparatus (NOB-MINI, manufactured by Hosokawa Micron Corporation). Specifically, the NCM and the first solid electrolyte were mixed in a mass ratio of 100:3, and the mixture was processed at a rotational speed of 6000 rpm for a processing time of 50 min. Thus, a positive electrode active material having the first layer of the coating layer formed on the surface thereof (a positive electrode active material with the first layer) was obtained.

The second solid electrolyte was adhered to the surface of the particle of the positive electrode active material with the first layer to form the second layer of the coating layer. The second layer of the coating layer was formed by a compression shear process using a particle composing apparatus (NOB-MINI, manufactured by Hosokawa Micron Corporation). Specifically, the positive electrode active material with the first layer and the second solid electrolyte were mixed such that the mass ratio of NCM to the second solid electrolyte was 100:0.5. The mixture was processed at a rotational speed of 6000 rpm for a processing time of 50 min. Thus, the second layer of the coating layer was formed, and the coated active material of Example 1 was obtained.

### [Preparation of Positive Electrode Mixture]

The coated active material, the third solid electrolyte, and a conductive additive were mixed in an agate mortar to prepare a positive electrode mixture. The mass ratio of the coated active material, the third solid electrolyte, and the conductive additive was 64:34:2. As the third solid electrolyte, LZYC was used. As the conductive additive, carbon nanofiber (manufactured by Showa Denko K.K.) was used.

### [Preparation of Negative Electrode Mixture]

In a dry argon atmosphere, Li₃YBr₂Cl₄ (hereinafter referred to as "LYBC") serving as the solid electrolyte, Li₄Ti₅O₁₂ (average particle diameter: 2.5 µm) serving as the negative electrode active material, and a conductive additive were mixed in an agate mortar to prepare a negative electrode mixture. The mass ratio of the negative electrode active material, the solid electrolyte, and the conductive additive was 64:34:2. As the conductive additive, carbon nanofiber (manufactured by Showa Denko K.K.) was used.

### [Fabrication of Battery]

In an insulating outer cylinder having an inner diameter of 9.4 mm, 63.3 mg of the positive electrode mixture, 50.9 mg of LZYC, 60.0 mg of LYBC, and 82.3 mg of the negative electrode mixture were stacked in this order. The positive electrode mixture, the solid electrolyte, and the negative electrode mixture were subjected to pressure-forming under a pressure of 720 MPa. Thus, a stack having a positive electrode, an electrolyte layer, and a negative electrode was fabricated. Next, current collectors made of stainless steel were disposed on the top and bottom of the stack, and current collector leads were attached to the current collectors. Finally, the insulating outer cylinder was hermetically sealed using an insulating ferrule so that the inside of the insulating outer cylinder was blocked from the external atmosphere.

### [Evaluation of Battery]

### (Measurement of Initial Discharge Capacity)

The initial discharge capacity of the battery of Example 1 was measured by the following method. A constant-current charge was performed at a current of 0.05C until the voltage reached 2.6 V, and then a constant-current discharge was performed at a current of 0.01C until the voltage reached 1.5 V. The discharge capacity measured at this time was regarded as the initial discharge capacity. The rest time between the charge and the discharge was 60 minutes. The charge and discharge were performed at a temperature of 25°C (ambient temperature). The result is shown in Table 1.

### [Measurement of Pulse Discharge Voltage at -40°C]

The pulse discharge voltage of the battery of Example 1 at -40°C was measured by the following method. The battery was charged to 2.6 V at 25°C and 0.05C, and then placed in a thermostatic chamber set at -40°C. After 2 hours, the battery was discharged at 0.07C, and the voltages after 0.5 seconds and after 1 second were measured. The results are shown in Table 1.

### (Example 2)

In preparing the coated active material, the second layer was formed by mixing the positive electrode active material with the first layer and the second solid electrolyte such that the mass ratio of NCM to the second solid electrolyte was 100:1. Except for this change, the same procedure as in Example 1 was followed to prepare the coated active material and battery of Example 2 and perform evaluation. The results are shown in Table 1.

### (Example 3)

In preparing the coated active material, the second layer was formed by mixing the positive electrode active material with the first layer and the second solid electrolyte such that the mass ratio of NCM to the second solid electrolyte was 100:2. Except for this change, the same procedure as in Example 1 was followed to prepare the coated active material and battery of Example 3 and perform evaluation. The results are shown in Table 1.

### (Comparative Example 1)

In preparing the coated active material, the second layer was not formed. That is, only the first layer was formed on the surface of NCM to prepare the coated active material of Comparative Example. Except for this change, the same procedure as in Example 1 was followed to prepare the coated active material and battery of Comparative Example 1 and perform evaluation. The results are shown in Table 1.

**[Table 1]**

| | Example 1 | Example 2 | Example 3 | Comparative Example 1 |
|---|---|---|---|---|
| Coating layer | LTAF + LZYC (0.5 mass%) | LTAF + LZYC (1 mass%) | LTAF + LZYC (2 mass%) | LTAF only |
| Initial discharge capacity ratio (relative to Comparative Example 1) | 1.032 | 1.055 | 1.015 | 1.000 |
| Pulse discharge voltage at -40°C (0.5 s) | 1.992 | 2.057 | 1.951 | 1.942 |
| [V] | | | | |
| Pulse discharge voltage at -40°C (1 s) | 1.899 | 1.979 | 1.902 | 1.897 |
| [V] | | | | |

In Table 1, the "initial discharge capacity ratio" is a value obtained by normalizing the initial discharge capacity by the initial discharge capacity of Comparative Example 1.

As shown in Table 1, the initial discharge capacities of the batteries of Examples 1 to 3 exceeded the initial discharge capacity of the battery of Comparative Example 1.

The pulse discharge voltages of the batteries of Examples 1 to 3 at -40°C exceeded the pulse discharge voltage of the battery of Comparative Example 1 at -40°C.

As described above, the coated active material in which an active material is coated with a coating layer including the first layer and the second layer exhibited enhanced output characteristics of the battery as compared with the coated active material in which an active material is coated with a coating layer consisting of the first layer.

### INDUSTRIAL APPLICABILITY

The technique of the present disclosure is useful, for example, for lithium-ion secondary batteries.

## Claims

1. A coated active material comprising:
a positive electrode active material; and
a coating layer coating at least a portion of a surface of the positive electrode active material, wherein
the coating layer comprises a first layer comprising a first solid electrolyte and a second layer comprising a second solid electrolyte,
the first layer is located between the second layer and the positive electrode active material,
the first solid electrolyte comprises Li, Ti, M1, and F, where the M1 is at least one selected from the group consisting of Ca, Mg, Al, Y, Zr, and Nb, and
the second solid electrolyte differs in composition from the first solid electrolyte.

2. The coated active material according to claim 1, wherein
the second layer is a layer comprising an outermost surface of the coated active material.

3. The coated active material according to claim 1, wherein
the first layer is in contact with the positive electrode active material.

4. The coated active material according to claim 1, wherein
in the first solid electrolyte, a ratio of an amount of substance of Li to a sum of amounts of substance of Ti and the M1 is 0.5 or more and 4.5 or less.

5. The coated active material according to claim 1, wherein
the M1 is at least one selected from the group consisting of Ca, Mg, and Al.

6. The coated active material according to claim 5, wherein
the M1 is Al.

7. The coated active material according to claim 1, wherein
the first solid electrolyte has a composition represented by the following formula (1):
Li_{6-(4-4x+m1x)b}(Ti₁₋ₓM1ₓ)_{b}F₆ (1)
in the formula (1), $0 < x < 1 and 0 < b \leq 2$ are satisfied, and
the m1 is a valence of the M1.

8. The coated active material according to claim 1, wherein
the second layer is substantially free of a conductive additive.

9. The coated active material according to claim 1, wherein
the second solid electrolyte comprises a halide solid electrolyte.

10. The coated active material according to claim 9, wherein
the second solid electrolyte is the halide solid electrolyte.

11. The coated active material according to claim 1, wherein
the second solid electrolyte comprises Li, M2, Y, and X,
the M2 is at least one element selected from the group consisting of metalloid elements and metal elements other than Li and Y, and
the X is at least one selected from the group consisting of F, Cl, Br, and I.

12. The coated active material according to claim 1, wherein
the second solid electrolyte has a composition represented by the following formula (2):
Li_{d}M2ₑY_{f}X₆ (2)
in the formula (2),
the M2 is at least one element selected from the group consisting of metalloid elements and metal elements other than Li and Y,
the X is at least one selected from the group consisting of F, Cl, Br, and I,
5.7 < d + m2e + 3f < 6.3, d > 0, e > 0, and f ≥ 0 are satisfied, and
the m2 is a valence of the M2.

13. The coated active material according to claim 11, wherein
the M2 is at least one selected from the group consisting of Na, K, Rb, Cs, Mg, Ca, Sr, Ba, Sc, Ti, Zr, Hf, Nb, Ta, W, Zn, Al, Ga, In, Si, Ge, Sn, Sb, and Bi.

14. The coated active material according to claim 11, wherein
the X is Cl.

15. The coated active material according to claim 1, wherein
a ratio of a mass of the second solid electrolyte to a mass of the positive electrode active material is more than 0 mass% and 5 mass% or less.

16. The coated active material according to claim 1, wherein
an average thickness of the first layer is 1 nm or more and 150 nm or less.

17. The coated active material according to claim 1, wherein
an average thickness of the second layer is 1 nm or more and 150 nm or less.

18. A positive electrode comprising the coated active material according to any one of claims 1 to 17.

19. A positive electrode comprising a positive electrode active material layer, the positive electrode active material layer consisting of a coated active material and a material phase excluding the coated active material, wherein
the coated active material comprises a positive electrode active material and a coating layer coating at least a portion of a surface of the positive electrode active material,
the coating layer comprises a first layer comprising a first solid electrolyte and a second layer comprising a second solid electrolyte,
the first layer is located between the second layer and the positive electrode active material,
the first solid electrolyte comprises Li, Ti, M1, and F, where the M1 is at least one selected from the group consisting of Ca, Mg, Al, Y, Zr, and Nb, and
the second solid electrolyte differs in composition from the first solid electrolyte,
the material phase comprises a third solid electrolyte, and
in an interfacial region between the coated active material and the material phase, a content of a conductive additive in the coating layer is lower than a content of a conductive additive in the material phase.

20. The positive electrode according to claim 19, wherein
in the first solid electrolyte, a ratio of an amount of substance of Li to a sum of amounts of substance of Ti and the M1 is 0.5 or more and 4.5 or less.

21. The positive electrode according to claim 19, wherein
the first solid electrolyte has a composition represented by the following formula (1):
Li_{6-(4-4x+m1x)b}(Ti₁₋ₓM1ₓ)_{b}F₆ (1)
in the formula (1), $0 < x < 1 and 0 < b \leq 2$ are satisfied, and
the m1 is a valence of the M1.

22. The positive electrode according to claim 19, wherein
the second solid electrolyte comprises a halide solid electrolyte.

23. The positive electrode according to claim 19, wherein
the second solid electrolyte comprises Li, M2, Y, and X,
the M2 is at least one element selected from the group consisting of metalloid elements and metal elements other than Li and Y, and
the X is at least one selected from the group consisting of F, Cl, Br, and I.

24. The positive electrode according to claim 19, wherein
the second solid electrolyte has a composition represented by the following formula (2):
Li_{d}M2ₑY_{f}X₆ (2)
in the formula (2),
the M2 is at least one element selected from the group consisting of metalloid elements and metal elements other than Li and Y,
the X is at least one selected from the group consisting of F, Cl, Br, and I, $5.7 < d + m 2 e + 3 f < 6.3 , d > 0 , e > 0 , and f \geq 0$ are satisfied, and
the m2 is a valence of the M2.

25. The positive electrode according to claim 19, wherein
an average thickness of the first layer is 1 nm or more and 150 nm or less.

26. The positive electrode according to claim 19, wherein
an average thickness of the second layer is 1 nm or more and 150 nm or less.

27. A battery comprising:
the positive electrode according to claim 18;
a negative electrode; and
a solid electrolyte layer disposed between the positive electrode and the negative electrode.

28. A battery comprising:
the positive electrode according to any one of claims 19 to 26;
a negative electrode; and
a solid electrolyte layer disposed between the positive electrode and the negative electrode.
